# EUROPEAN PATENT APPLICATION

(11) **EP 4 786 152 A1**
(43) Date of publication of application: **05.08.2026**
(21) Application number: 23953702.0
(22) Date of filing: 28.09.2023
(51) Int. Cl.: B29L 31/56, B29C 49/42, B65D 51/20

(54) **NOZZLE, COVER ASSEMBLY, AND PACKAGING CONTAINER**

(71) Applicant: SIG Services AG, 8212 Neuhausen am Rheinfall (CH)
(72) Inventor: LIANG, Qingyang, Suzhou, Jiangsu 215314 (CN); ZURCHER, Remo, Suzhou, Jiangsu 215028 (CN)
(74) Representative: Herzog IP Patentanwalts GmbH
(86) International application number: PCT/CN2023/122710
(87) International publication number: WO 2025/065555

(57) **Abstract**

A spout (10), comprising: a base (11); and an annular wall (12) extending from the base (11), the annular wall (12) defining a passage (121) allowing contents in a packaging container to flow out, the base (11) comprising a base wall (111) and a side wall, and the side wall comprising recessed portions recessed towards a central axis of the spout (10). A cap assembly (1) comprising the spout (10) and a packaging container comprising the cap assembly (1).

## Description

### TECHNICAL FIELD

The present invention relates to the technical field of packaging, and in particular to a spout, a cap assembly comprising the spout, and a packaging container comprising the cap assembly.

### BACKGROUND ART

Packages for food, in particular liquid food, typically have a number of different forms, and the different forms may differ in the material and shape of a container (or packaging cylinder), the structural form of a cap assembly for a food package, etc. In an actual production process, in order to obtain a complete food package, it is first necessary to hermetically connect a container (which may be made of a paper composite material or a non-paper-based material) to a cap assembly at one end of the container, and then complete the closure of the container at the other end after food has been filled into the container by using a filling device.

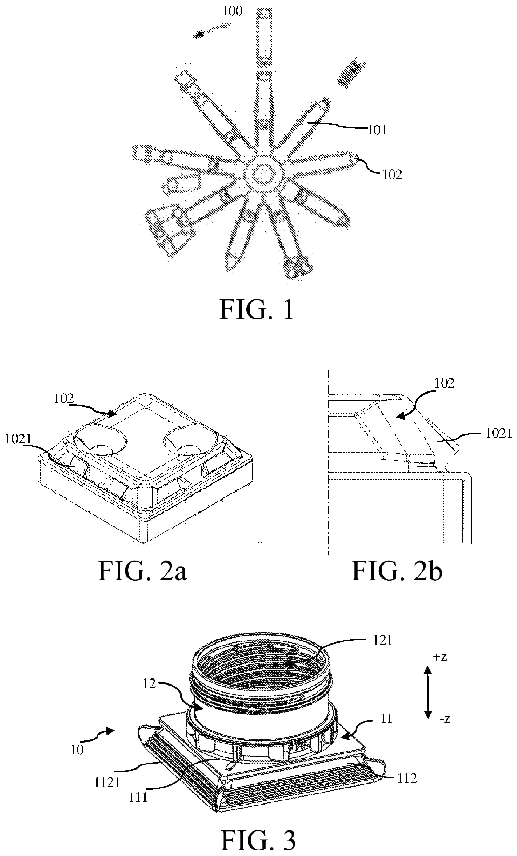

It should be understood that the prior art typically adopts a mature production line to complete the above process steps. In particular, when the container is hermetically connected to the cap assembly, such operation is generally performed with the aid of an assembly mechanism as shown in FIG. 1. The assembly mechanism comprises a plurality of rotatable shaped rods, and each of the shaped rods is intended to correspondingly fit with the container and the cap assembly. For example, the container and the cap assembly may be introduced onto a shaped rod one after the other, and after both the container and the cap assembly are in place on the shaped rod, hot air is used to thermally activate/heat specific portions of the cap assembly and the container, such that these specific portions are in a molten state or a flowable state under high-temperature heating, thereby allowing the two to be forcibly sealingly bonded together under pressure.

However, since the shaped rod is typically made of metal material while the cap assembly is made of plastic material, the two materials exhibit significantly different coefficients of thermal expansion. As a result, when heated with hot air, the cap assembly expands thermally to a noticeably greater extent than the shaped rod. Consequently, during high-speed rotation of the shaped rod, the cap assembly can be thrown off the shaped rod easily due to centrifugal force. The occurrence of separation of the cover is clearly undesirable, as this would lead to failure of the subsequent filling process.

In view of the above problems, several solutions have been proposed in the prior art. For example, a known solution in the prior art proposes to provide a larger number of retention portions on the shaped rod, so as to use the increased number of retention portions to increase the force to retain the cap assembly on the shaped rod. However, this solution still cannot properly solve the problem of the cap assembly being thrown off the shaped rod, and this solution also leads to high design and manufacturing costs.

Therefore, the present invention is intended to propose an improved technical solution, so that the above or other disadvantages in the prior art can be overcome.

### SUMMARY OF THE INVENTION

The present invention is proposed in view of the above background, and an objective of the present invention is to provide an improved spout and a cap assembly comprising the spout, so that the problem that the cap assembly is separated from or is thrown off a shaped rod can be solved, thereby reducing the reject rate of packages and reducing costs.

According to a first aspect of the present invention, a spout is proposed, wherein the spout comprises a base and an annular wall extending from the base, the annular wall defines a passage allowing contents in a packaging container to flow out, the base comprises a base wall and a side wall, and the side wall comprises recessed portions recessed towards a central axis of the spout.

As an embodiment, the side wall comprises a plurality of side wall portions connected to one another, and one of the recessed portions is provided on at least one of the side wall portions.

As an embodiment, the recessed portions are located at the bottom of the base and have a maximum recessed depth at a bottom edge of the side wall portions, and the maximum recessed depth is defined as a maximum distance from the bottom edge to a straight line defined by two end points of the bottom edge, wherein the maximum recessed depth is designed to be 0.05 mm-1 mm.

As an embodiment, the maximum recessed depth is designed to be 0.2 mm-0. 5 mm.

As an embodiment, each side wall portion comprises one bottom edge, one bottom plane is defined by three points located on at least two bottom edges and being relatively lowest in the axial direction, an end point of the bottom edge is at a distance from the bottom plane, and the distance must not be greater than 0.4 mm.

As an embodiment, the base comprises four side wall portions, and the four side wall portions define a space having a substantially square cross section.

As an embodiment, the spout is formed by injection molding, and a material for injection molding comprises high-density polyethylene.

As an embodiment, a molding material for the spout has a shrinkage of 1.6%-2.0%.

According to a second aspect of the present invention, a cap assembly is further proposed, and the cap assembly comprises the above spout and an cap that can be engaged on the annular wall of the spout.

As an embodiment, the cap assembly comprises a spacer portion integrally injection molded with the spout, and the spacer portion is provided between the passage and a space defined by the base wall and the side wall and is provided with a weakened region.

As an embodiment, the cap assembly further comprises a self-opening sleeve, the self-opening sleeve is provided with a piercing element, and when the cap rotates relative to the annular wall to move towards a first direction, the piercing element on the self-opening sleeve moves towards a second direction opposite to the first direction to pierce the weakened region to allow the passage to be in fluid communication with the space.

According to a third aspect of the present invention, a packaging container is further proposed, and the packaging container comprises the cap assembly as described above.

Compared with the prior art, the use of the spout and the cap assembly according to the present invention not only well solves the problem that the cap assembly is separated from or is thrown off the shaped rod, but also can ensure that after a sealed connection between the cap assembly and the container is completed, the sealed assembly is easily pushed away from the shaped rod, so as to smoothly complete a subsequent filling process. In addition, the production and manufacturing costs are low since no complex structural design is involved.

### BRIEF DESCRIPTION OF THE DRAWINGS

By means of the following description with reference to the accompanying drawings, the above and other features and advantages of the present invention will become more readily understood.
FIG. 1 shows a known prior art assembly mechanism for achieving a sealed connection between a cap assembly and a container, wherein the assembly mechanism comprises a plurality of rotatable shaped rods intended to fit with the container and the cap assembly;
FIG. 2a and FIG. 2b show, respectively in a perspective view and in a half side view, a connecting base provided on the shaped rod shown in FIG. 1 and intended to fit with the cap assembly;
FIG. 3 shows a spout according to an embodiment of the present invention in a perspective view;
FIG. 4 shows a spout according to an embodiment of the present invention in a bottom view; and
FIG. 5 shows a cap assembly according to an embodiment of the present invention in a cross-sectional view.

All the accompanying drawings are only schematic and not necessarily drawn to scale, and moreover they only show those parts necessary in order to elucidate the present invention, and other parts are omitted or merely mentioned. That is, the present invention may further include other components in addition to the components illustrated in the accompanying drawings.

### DETAILED DESCRIPTION OF THE PREFERRED EMBODIMENT

In the following description, numerous specific details are set forth in order to provide a more thorough understanding of the present invention to those skilled in the art. It will be clear, however, to those skilled in the art that the present invention may be implemented without some of these specific details. The following aspects, features, embodiments, and advantages are merely illustrative and should not be considered elements or limitations of the claims except where explicitly recited in the claims. In addition, it should be pointed out that in the present description, identical and/or functionally identical technical features are referred to by the same or similar reference numerals.

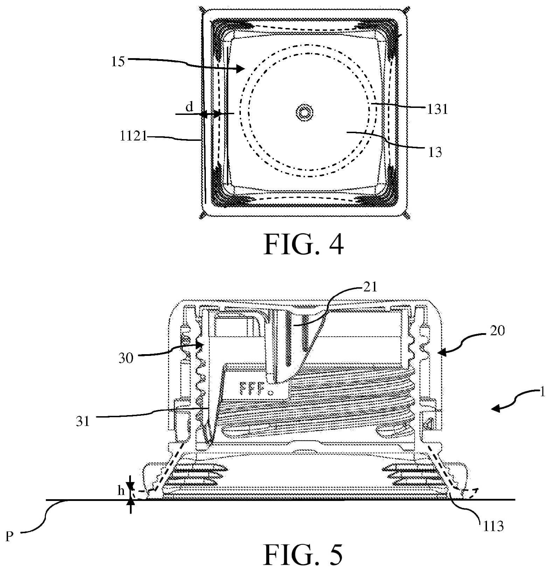

As mentioned in the background, the container and the cap assembly can generally be connected hermetically by means of an assembly mechanism 100 as shown in FIG. 1. The assembly mechanism 100 comprises a plurality of shaped rods 101 rotatable at a high speed around a common rotation axis, and an end portion of each shaped rod 101 is provided with a connecting base 102 (as shown in FIG. 2a and FIG. 2b) intended to correspondingly fit with the cap assembly. In order to increase the retention force between the cap assembly and the connecting base 102 as much as possible, it is proposed in the prior art to provide a larger number of retention portions 1021 on the connecting base 102, and the retention portions 1021 are intended to fit with corresponding snap portions 113 (see FIG. 5) on a base of a spout included in the cap assembly, so as to stably retain the cap assembly on the shaped rod or precisely on the connecting base 102. This solution imposes higher requirements on the design and manufacturing of the connecting base on the shaped rod, and the risk of the cap assembly being thrown off still cannot be completely avoided.

To this end, the present invention proposes an improved solution. Unlike the known solution in the prior art, the main improvement point of the present invention relates to the structural improvement of the cap assembly itself. The applicant has found through research that, the use of such an improved cap assembly (specifically, the spout of the cap assembly) not only well solves the problem of the cap assembly being separated from or thrown off the shaped rod, but also can ensure that after a sealed connection between the cap assembly and the container is completed, the sealed assembly is easily pushed away from the shaped rod to smoothly complete a subsequent filling process.

The present invention will be described below in conjunction with the specific embodiments shown in FIG. 3 to FIG. 5. FIG. 3 and FIG. 4 show a spout according to an embodiment of the present invention in a perspective view and a bottom view, respectively, and FIG. 5 shows a cap assembly according to an embodiment of the present invention in a cross-sectional view. It should be understood that a packaging container according to the present invention is obtained by hermetically connecting together the cap assembly 1 shown in FIG. 5 and a container not shown in the figure.

Specifically, referring to FIG. 3, FIG. 3 shows a spout 10 according to a specific embodiment of the present invention. The spout 10 comprises a base 11 and an annular wall 12 extending from the base 11, the annular wall 12 defines a passage 121 allowing contents, such as a food, in a packaging container to flow out, and the base 11 is intended to be hermetically connected to the container (such as a paper-based cylinder formed by a sheet or a cylindrical member of other materials).

Specifically, the base 11 comprises a base wall 111 and a side wall, the side wall, together with the base wall, defines a space 15 (see FIG. 4), and the space 15 is intended to lead to the inner volume of the container (not shown in the figure). In the specific embodiment shown in FIG. 3, the side wall comprises four side wall portions 112 connected to one another, and the four side wall portions 112 define a space 15 having a substantially square cross section. Certainly, another quantity of side wall portions or a side wall with another configuration (such as a non-polyhedral surface), and a correspondingly configured shaped rod matching the same are also conceivable, as long as the function intended to be achieved herein can be achieved.

To solve the problem of the cap assembly being separated from the shaped rod, the present invention proposes an improved spout 10, wherein the side wall of the base 11 of the spout 10 comprises recessed portions recessed towards the central axis of the base. Referring particularly to FIG. 4, each side wall portion 112 comprises one recessed portion. The recessed portion is located at the bottom of the base. For clarity, the recessed direction of a bottom edge 1121 of the base and the recessed degree of the recessed portion at the bottom edge portion of the base are schematically indicated by dashed lines in FIG. 4. As shown in FIG. 4, there is a maximum recessed depth d at the bottom edge 1121 of the base, and the maximum recessed depth is defined as a maximum distance from the bottom edge to a straight line defined by two end points of the bottom edge. The maximum recessed depth at the bottom edge is advantageous in that the snap portion 113 (see FIG. 5) on the bottom edge can engage with the bottom of the retention portion 1021 on the connecting base 102 deeper or more part of the snap portion 113 can abut and contact the bottom of the retention portion 1021, so that the retention force between the two is larger, so as to allow the cap assembly to resist being thrown out due to the centrifugal force.

The spout having the above recessed portion may be formed by injection molding, and a material for injection molding comprises high-density polyethylene (HPDE). A molding material for the spout preferably has a shrinkage of 1.6%-2.0%. It should be understood that the shrinkage of a material is an inherent property of the material and can be measured using a known measurement method or a known measurement device in the art. This performance parameter is advantageous because, with the shrinkage performance of such a material, after the spout is formed by injection molding of the material, the spout will form the side wall portion 112 having a recessed portion that is recessed towards the central axis of the base due to free shrinkage after injection molding.

Regarding the specific process of forming the above recessed portion, it should be understood that the maximum recessed depth of the recessed portion can be adjusted or changed by designing a spout mold reversely, in addition to relying on the above-mentioned natural shrinkage. For example, the maximum recessed depth of the spout at the bottom edge obtained after natural shrinkage can be reduced, or the maximum recessed depth can even be adjusted to near zero, by designing the spout mold to have a protruding portion projecting in the direction opposite to the recessed direction of the above recessed portion. However, the applicant's studies have shown that a spout formed with a normal mold (i.e. comprising a substantially straight side wall portion without being designed with any reversely protruding portion) and obtained after natural shrinkage can have a satisfactory retention force.

**Table 1**

| Mold design | Cap assembly form | Is the cap assembly inwardly recessed | Flatness | Disengagement force | Does separation of the cover occur |
|---|---|---|---|---|---|
| Normal mold (without being designed with any reversely protruding portion) | The base of the cap assembly is largely recessed at the bottom edge | Yes | Non-flat | >6 Nm | No |
| Reverse mold 1 (with a reverse protruding depth of 0.2 mm) | The base of the cap assembly is very slightly recessed at the bottom edge | Substantially without recession | Good | <2 Nm | Yes |
| Reverse mold 2 (with a reverse protruding depth of 0.3 mm) | The base of the cap assembly is substantially straight at the bottom edge | No | Good | <2 Nm | Yes |

**Table 2**

| No. | Disengagement force (normal mold) | Disengagement force (reverse mold 1) | Disengagement force (reverse mold 2) |
|---|---|---|---|
| Note: The disengagement force was measured at 60°C, and the cap assembly sample was heated for at least 3 hours | | | |
| 1 | > 6 N | < 2 N | < 2 N |
| 2 | > 6 N | < 2 N | < 2 N |
| 3 | > 6 N | < 2 N | < 2 N |
| 4 | > 6 N | < 2 N | < 2 N |
| 5 | > 6 N | < 2 N | < 2 N |
| 6 | > 6 N | < 2 N | < 2 N |
| 7 | > 6 N | < 2 N | < 2 N |
| 8 | > 6 N | < 2 N | < 2 N |
| 9 | > 6 N | < 2 N | < 2 N |
| 10 | > 6 N | < 2 N | < 2 N |
| 11 | > 6 N | < 2 N | < 2 N |
| 12 | > 6 N | < 2 N | < 2 N |
| 13 | > 6 N | < 2 N | < 2 N |
| 14 | > 6 N | < 2 N | < 2 N |
| 15 | > 6 N | < 2 N | < 2 N |
| 16 | > 6 N | < 2 N | < 2 N |
| 17 | > 6 N | < 2 N | < 2 N |
| 18 | > 6 N | < 2 N | < 2 N |
| 19 | > 6 N | < 2 N | < 2 N |
| 20 | > 6 N | < 2 N | < 2 N |
| Note | No risk of cover separation | Separation of the cover occurs | Separation of the cover occurs |

As can be seen from Table 1 above, due to the compensation effects of the reverse mold 1 (with a reverse protruding depth of 0.2 mm) and the reverse mold 2 (with a reverse protruding depth of 0.3 mm), the base of the finally formed cap assembly is substantially straight or very slightly recessed at the bottom edge after undergoing natural shrinkage. In this case, the retention force between the cap assembly and the connecting base on the shaped rod is smaller than the retention force between the connecting base and the cap assembly obtained after being molded with a normal mold (that is, the mold is not designed with any protruding portion projecting in the direction opposite to the recessed direction of the recessed portion of the side wall of the base) and undergoing natural shrinkage. Thus, the required disengagement force is also smaller (less than 2 Nm), while the disengagement force of the cap assembly molded with the normal mold relative to the connecting base is greater than 6 Nm. Table 2 details a plurality of cover separation tests performed on cover assemblies respectively formed by the "normal mold", the "reverse mold 1", and the "reverse mold 2". The experimental data also shows that the spout obtained after being molded with the normal mold and undergoing natural shrinkage has the best cover separation prevention performance, the cap assembly has a disengagement force of greater than 6 Nm, and there is no risk of cover separation.

With continued reference to FIG. 4-FIG. 5, the maximum recessed depth d at the bottom edge mentioned above may be designed to be 0.05 mm-1 mm, and this numerical range of maximum recessed depth can ensure a desired retention force for the cap assembly (e.g., greater than 6 Nm) to avoid any undesired cover separation phenomenon. Preferably, the maximum recessed depth d is designed to be 0.2 mm-0. 5 mm.

In addition to the above recessed phenomenon, there is a phenomenon that the four corners of the base of the spout are warped upwards. For clarity, the end point of the bottom edge (corresponding to the tip point of the corner) is schematically shown in FIG. 5 by a dashed line as being warped upwards. One bottom plane P is defined by three points located on at least two bottom edges and being relatively lowest in the axial direction (as schematically shown in FIG. 5). An end point of the bottom edge is at a distance h from the bottom plane P, and the distance must not be greater than 0.4 mm, so that the warpage degree of the base can be defined to ensure that the spout exhibits better cover separation prevention performance. It should be understood that, in an actual operation process, to obtain the value of h by knowing the bottom plane, the entire spout may be placed on a horizontal plane such as a desktop, and the distance between the tip point of each corner and the desktop is measured to obtain the value of h.

Referring back to FIG. 4, a spacer portion 13 integrally injection molded with the spout 10 is further provided on the spout 10, and the spacer portion 13 is provided as a part of the cap assembly 1, is disposed between the passage 121 defined by the annular wall 12 and the space 15 defined by the base wall and the side wall, and is provided with a weakened region 131.

FIG. 5 shows a cap assembly 1 according to the present invention in a sectional view. In order to ensure sealed storage of a food inside the container, the cap assembly 1 further includes an cap 20, and the cap 20 can be, for example, threadably engaged on the annular wall 12 of the spout 10 to close the interior volume of the container. As a particular embodiment, the cap 20 includes a driving member 21 integrally formed with the cap. A user can drive the driving member 21 and the cap 20 to rotate together manually or by using a tool. The cap assembly 1 further includes a self-opening sleeve 30. The self-opening sleeve 30 may be provided with a piercing element 31. As the cap 20 rotates relative to the annular wall 12 and moves in a first direction (e.g., in the direction of +z in FIG. 3), for example, since the direction of a thread provided on the self-opening sleeve 30 is opposite to the direction of a thread on the cap, the self-opening sleeve 30 will move in a second direction (e.g., in the direction of -z in FIG. 3) opposite to the first direction when rotating together with the driving member 21. Therefore, the weakened region 131 can be pierced by the piercing element 31 to allow the passage 121 to be in fluid communication with the space 15, thereby allowing the contents in the packaging container to migrate from the space 15 into the passage 121 via a damaged area, and finally being poured out via the passage 121 in a state where the cap 20 is removed for convenient consumption by the user.

In a practical production process, after completion of manufacturing of the cap assembly and the container, the cap assembly and a part of the container are heated with hot air by means of the assembly mechanism having a plurality of rotatable shaped rods. Subsequently, a part of the container is hermetically joined to the base of the spout around the spout in the cap assembly by pressure at a sealing station to form a pre-formed packaging container of a food to be filled. The pre-formed packaging container is further pushed to a food filling device to complete filling of the food, subsequently to complete the sealing at a potting opening of the container and finally to form a package filled with the food to be delivered to an end user.

The use of the spout and the cap assembly according to the present invention not only well solves the problem that the cap assembly is separated from or is thrown off the shaped rod, but also can ensure that after a sealed connection between the cap assembly and the container is completed, the sealed assembly is easily pushed away from the shaped rod. This ensures the efficiency of the pre-formed food package in the subsequent filling process, thereby greatly reducing the reject rate of the finally formed food package and reducing the costs.

It should be noted that the embodiments described above are to be considered as illustrative only and the present invention is not limited to these embodiments. By considering the contents of the present specification, those skilled in the art may make various changes and modifications without departing from the scope or spirit of the present invention. The actual scope of the present invention is defined by the appended claims and equivalent solutions.

## Claims

1. A spout (10), comprising a base (11) and an annular wall (12) extending from the base, the annular wall defining a passage (121) allowing contents in a packaging container to flow out, and the base (11) comprising a base wall (111) and a side wall, and being **characterized in that** the side wall comprises recessed portions recessed towards a central axis of the spout.

2. The spout according to claim 1, wherein the side wall comprises a plurality of side wall portions (112) connected to one another, and at least one of the side wall portions is provided with one of the recessed portions.

3. The spout according to claim 2, wherein the recessed portions are located at the bottom of the base (11) and have a maximum recessed depth (d) at a bottom edge (1121) of the side wall portions (112), and the maximum recessed depth is defined as a maximum distance from the bottom edge to a straight line defined by two end points of the bottom edge, wherein the maximum recessed depth is designed to be 0.05 mm-1 mm.

4. The spout according to claim 3, wherein the maximum recessed depth is designed to be 0.2 mm-0. 5 mm.

5. The spout according to any one of claims 2 to 4, wherein each side wall portion (112) comprises one bottom edge (1121), and one bottom plane (P) is defined by three points located on at least two bottom edges and being relatively lowest in the axial direction; and an end point of the bottom edge is at a distance (h) from the bottom plane, and the distance must not be greater than 0.4 mm.

6. The spout according to any one of claims 1 to 5, wherein the base (11) comprises four side wall portions (112), and the four side wall portions define a space having a substantially square cross section.

7. The spout according to any one of claims 1 to 5, wherein the spout (10) is formed by injection molding, and a material for injection molding comprises high-density polyethylene.

8. The spout according to claim 7, wherein a molding material for the spout (10) has a shrinkage of 1.6%-2.0%.

9. A cap assembly, **characterized in that** the cap assembly (1) comprises the spout (10) according to any one of claims 1 to 8 and an cap (20) that can be engaged on the annular wall of the spout.

10. The cap assembly according to claim 9, wherein the cap assembly (1) comprises a spacer portion (13) integrally injection molded with the spout (10), and the spacer portion is provided between the passage (121) and a space (15) defined by the base wall and the side wall and is provided with a weakened region (131).

11. The cap assembly according to claim 10, wherein the cap assembly (1) further comprises a self-opening sleeve (30), the self-opening sleeve is provided with a piercing element (31), and when the cap (20) rotates relative to the annular wall (12) to move towards a first direction, the piercing element (31) on the self-opening sleeve moves towards a second direction opposite to the first direction to pierce the weakened region (131) to allow the passage to be in fluid communication with the space.

12. A packaging container, **characterized in that** the packaging container comprises the cap assembly (1) according to any one of claims 9 to 11.
